Europäisches Patentamt

European Patent Office

Office européen des brevets

(19)

(11) **EP 0 449 293 B1**

(12) ## EUROPEAN PATENT SPECIFICATION

(45) Date of publication and mention
of the grant of the patent:
**21.10.1998 Bulletin 1998/43**

(51) Int Cl.⁶: **G06T 11/00**

(21) Application number: **91105011.0**

(22) Date of filing: **28.03.1991**

(54) **Method and apparatus for three-dimensional displaying of a physical quantity**

Verfahren und Gerät zur dreidimensionalen Anzeige einer physikalischen Grösse

Méthode et appareil pour affichage tridimensionnel de quantité physique

(84) Designated Contracting States:
**DE FR GB**

(30) Priority: **28.03.1990 JP 76743/90**

(43) Date of publication of application:
**02.10.1991 Bulletin 1991/40**

(73) Proprietor: **Hitachi, Ltd.**
**Chiyoda-ku, Tokyo 101-0062 (JP)**

(72) Inventors:
  • **Yamashita, Junichi**
    **Ibaraki-ken (JP)**
  • **Soneda, Hideo**
    **Ibaraki-ken (JP)**
  • **Sugawara, Satoshi**
    **Ibaraki-ken (JP)**

(74) Representative: **Beetz & Partner Patentanwälte**
**Steinsdorfstrasse 10**
**80538 München (DE)**

(56) References cited:
**EP-A- 0 412 693**

  • **IBM SYSTEMS JOURNAL vol. 26, no. 2, 1987,
    FARREL 'visual interpretation of complex data'**
  • **PROCEEDINGS.TRENDS &
    APPLICATIONS.1985.UTILIZING COMPUTER
    GRAPHICS May 1985, MARYLAND.USA
    MAGNENAT-THALMANN ET AL. 'a new tool for
    business graphics: the animated data system'**
  • **IEEE COMPUTER GRAPHICS AND
    APPLICATIONS, no. 4, July 1988, NY, US, pages
    51 - 58 A.W. DONOHO 'Mac Spin: Dynamic
    Graphics on a Desktop Computer'**

## Description

The present invention relates to a display method for displaying a three-dimensially distributed physical quantity and a device therefor.

A method for transferring information to human through several kinds of characters by combining a display device using a color cathode-ray tube with a computer is well known. Further an example of a method and a device for displaying a process condition with some patterns prepared beforehand and colors selected automatically depending on the condition at that moment is disclosed in JP-B-52-21858 (1977). In this conventional art values on an arbitrary plane, e.g. in a reactor core relating to physical quantities in a nuclear power plant or a thermal power plant, such as output, temperature and neutron flux in the reactor core, are caused to be displayed by a color code according to the values thereof. Further, in the distribution indication device for interspatial variables disclosed in JP-A-62-128377 (1987) a sliced plane within a three-dimensional space is selected, and the distribution of variable values on the sliced plane is obtained to display the same. The sliced plane is successively changed so as to obtain the distribution of the three-dimensional physical quantity.

On the other hand, an example of common display methods for displaying three-dimensional bodies is disclosed in JP-A-60-217461 (1985) in which the relative distances of respective bodies in the three-dimensional space are displayed on a two-dimensional display by brightness and saturation of color.

In the above described art of JP-B-52-21858 and JP-A-128377, since the physical quantity is displayed after designation of a sliced plane, it is difficult to compare the physical quantity of a sliced plane of which display was already finished with that which is actually being displayed; for performing the comparison it is necessary to designate a new sliced plane including both positions to be subjected to comparison and thereafter to perform the display. There is the problem that the physical quantity to be dealt with may increase or decrease. Further, by these methods, an intuitive grasp of the three-dimensional spatial distribution is difficult.

On the other hand, the method disclosed in JP-A-60-217461 expresses the relative distances of three-dimensional bodies by using a three-dimensional representation by means of color (brightness, saturation and hue), and thus, the distribution of the physical quantity in the three-dimensional space cannot be intuitively and momentarily grasped.

The document "IBM Systems Journal, vol. 26, No. 2, 1987, pages 175-200" shows to obtain a cutout by cutting out spatially a transistor having a 3D-structure. Afterwards the electron density is displayed in different colours in the extracted space.

It is the object of the present invention to provide a display method for displaying a three dimensionally distributed physical quantity and a device therefor for displaying the three-dimensional distribution of the physical quantity efficiently without using sliced planes and as well in a form facilitating a sensual grasp by the observer.

The above object is achieved according to the claims. The dependent claims relate to preferred embodiments.

For achieving the above object, when the spatial distribution of a physical quantity to be displayed is given, the present invention teaches to divide the value range showing the physical quantity into a plurality of small value ranges, to obtain the distribution of the spatial positions where the physical quantity has a value falling into the small value range for every small value range to display the same, and to repeat the above operation by successively changing the small value range.

By changing successively the small value range so as to monotonously increase or decrease the physical quantity, and as well, when the display of the spatial distribution for one small value range finishes by shifting to the next small value range after erasing the same or by shifting to the next small value range without erasing the same, a total and easy grasp of the three-dimensional physical quantity distribution can be intuitively performed. Further, since the necessity of repeating the processing of setting slice planes and thereafter obtaining the distribution is eliminated and the physical quantity at desired positions can also be immediately read or compared, the display processing time can be greatly shortened thereby.

In the following, the invention will be explained with reference to the drawings relating to preferred embodiments.

Figs 1 and 2 show flowcharts for a processing system, not embodying the invention, for displaying a three-dimensional spatial distribution of a physical quantity;
Fig. 3 is a flowchart showing an embodiment of a display processing using a method according to the present invention, Fig. 4 shows views of display examples according to the embodiment in Fig. 3, and Figs. 5 and 6 are block diagrams showing an embodiment of a three-dimensional physical quantity display device using the display method according to the present invention.

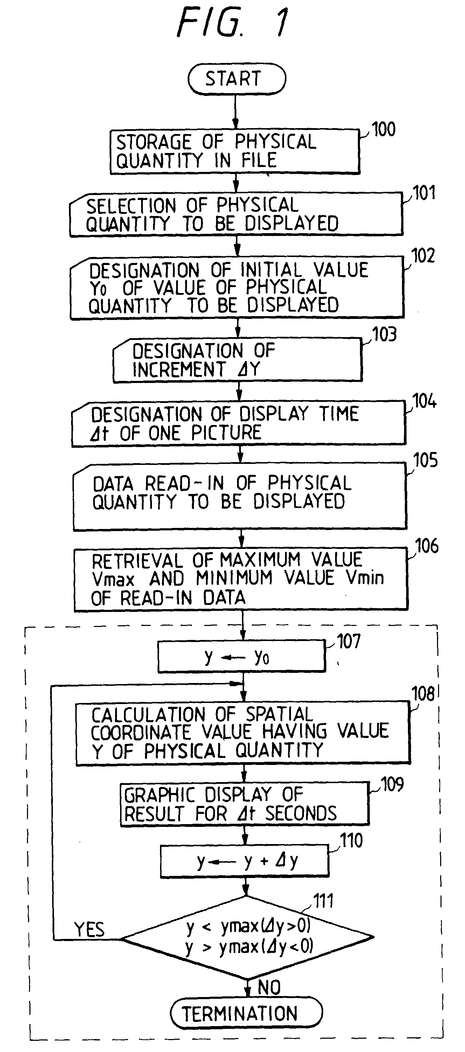

In Fig. 1 data of a physical quantity of a physical system is stored into a file (step 100). The data is outputted from e.g. a plant and is processed by a computer. The physical quantity could also be simulation results. Nextly, a user designates one of the physical quantities to be displayed, for example, a reactor core output, temperature, pressure, void rate, neutron flux and heat flux in a reactor core of a nuclear reactor (step 101). Assuming the physical quantity just designated is $\phi$, $\phi$ depends on a spatial coordinate R. Nextly, the value of the physical quantity φ at the time when the display is started, namely the initial value Y0 of the physical quantity φ on a display screen, the display time Δt on the screen and the increment ΔY of the next value φ being displayed after Δt seconds are designated (step 102-104). By these the user finishes the designation work, a computer or a graphic device which executes this processing fetches data of the physical quantity φ to be displayed from the file (step 105), and the maximum value Ymax and the minimum value Ymin of the data are obtained (step 106). Further, in this step, when the three-dimensional physical quantity is desired to be displayed by colors, the physical quantity defined by the maximum value and the minimum value is divided into groups and the colors are allocated corresponding to the respective divided ones.

After the above preparatory processing is completed, display processing 1 according to the above example is performed. Here, firstly by substituting the initial value YO of φ to be displayed is substituted into work variable Y (step 107) and a set of positional coordinates in the three-dimensional space having the value Y is obtained (step 108). The physical quantity values Y fetched in the step 105 are the values given at the respective mesh points in the objective spatial coordinate system and are scattering. This calculation is for obtaining positional coordinates which are assumed to have the value Y desired to be displayed by properly interpolating between the values on the respective mesh points. In the next step 109, all of the coordinates having the value Y thus obtained are displayed on the screen for Δt seconds. However, at this instance, since the coordinates having the value Y are the coordinate values in the three-dimensional space, it is necessary to convert these into the two-dimensional display coordinate system suitable for the display screen to display the same. Further at this instance, by displaying one or a plurality of closed curved planes by connecting two dimensional coordinate positions to be displayed with lines and coloring the surface of the closing curved planes, the interspatial distribution of the value Y of the physical quantity φ can also be easily grasped. After finishing the display of this initial value Y0 for Δt seconds, these are erased, and by renewing the value of Y into Y+ ΔY (step 110) a spatial distribution display is performed in the same manner as the above. This screen image is also erased after displaying for Δt seconds and this operation is repeated until the value of Y reaches Ymax. The termination judgement is performed in step 111. According to the present embodiment, the distribution of φ in the three dimensional space can be easily and intuitively grasped by continuously changing the value Y, thus enabling display of the three-dimensional spatial distribution of the physical quantity φ. In the above embodiment, the user inputs and sets the screen image display time Δt so that thereafter the screen image automatically changes at every Δt seconds, however, the user may also input the time at every single display by such as a switching operation.

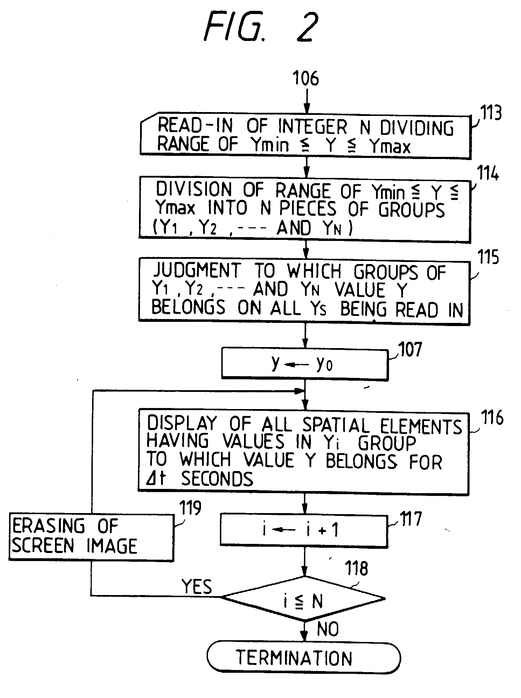

Fig. 2 shows a processing, in which a portion of the processsing 1 following to the step 106 in Fig. 1 is modified. Following to the step 106 in Fig. 1, the region between Ymax and Ymin is divided into N pieces and, while successively changing the resultant regions, all of the spatial positions are displayed, the physical quantities of which have a value falling into the respective resultant regions. At first, the number of regions N to be divided of the value Y, the range of which is indicated as follows,

$$Ymax \geq Y \geq Ymin$$

is designated (step 113). Nextly, the region between Ymin and Ymax is divided into N regions (Y1, Y2 ... and Yn (step 114). Further here, when the size of the physical quantity is displayed in color or pattern, these respective N regions Y1, Y2 ... and Yn are allocated to different colors or patterns. Nextly, it is judged to which of the resultant region Y1, Y2 ... or Yn the value Y to be displayed belongs (step 115). Nextly, among respective spatial elements which are divided and designated by a spatial mesh in the coordinate system on the display screen, all of the elements having the value Y included in the region Yi to which the value Y0 belongs are displayed for Δt seconds (step 107 and 116). The values which the spatial elements displayed at this instance have, are not necessarily Y0, but are in a predetermined band, and the condition of the spatial distribution of the physical quantity φ having the value Y0 can be materially grasped by the picture image constituted by the spatial elements displayed. When the dividing number N is increased, a further accurate understanding of the configuration of the spatial distribution of φ is obtained. Nextly, for causing the spatial distribution having values Y larger than Y0 to be displayed, the region Yi+1 adjacent to the region Yi is selected, the spatial elements now displayed are erased and the spatial elements having values Y included in this region Yi+1 are displayed (step 117-119). This operation is repeated until the spatial elements having values Y included in Yn (Yn is the region including Ymax) are displayed. As explained thus far by changing successively the spatial elements caused to be displayed with Δt second interval the three dimensional grasping of the spatial distribution of the physical quantity φ becomes easy and the complicated processing such as in the case of using the sliced planes is eliminated.

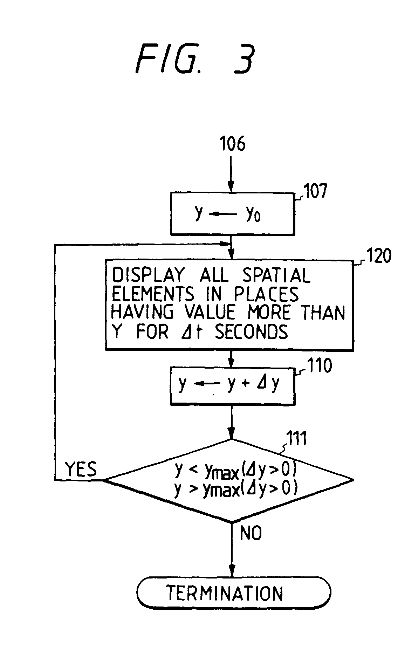

Fig. 3 shows an embodiment of the present invention. While the processings shown in Fig. 1 and Fig. 2 are to enable grasping of the spatial distribution of φ by repeating an operation in which the values of the physical quantity φ or those near to Y are displayed, erased and those which correspond to Y next are displayed again, this embodiment is to enable grasping of the three-dimensional distribution of the physical quantity φ by repeating such operation in which at one time the spatial distribution of $\phi$ having values not less than Y0 (or not more than) is displayed for a predetermined time, and nextly this value of Y0 is caused to increase (or decrease) and again to display the distribution for a predetermined time. The case of Fig. 3 is the same as Fig. 1 until step 106, and in a step 107 the value of Y0 is substituted into the work variable Y. Nextly, all of the spatial elements in the display coordinate system on the screen which have the physical quantity $\phi$ of the value not less than Y are displayed for $\Delta t$ seconds (step 120). In this instance, it helps visible understanding when the respective elements are displayed by suitable coloring or pattering according to the values of Y of the respective elements. Nextly, the operation in which the processing in the above step 120 is performed by causing the value of Y to increase by $\Delta Y$ is repeated until Y reaches Ymax (or reaches Ymin) (step 110 and 111).

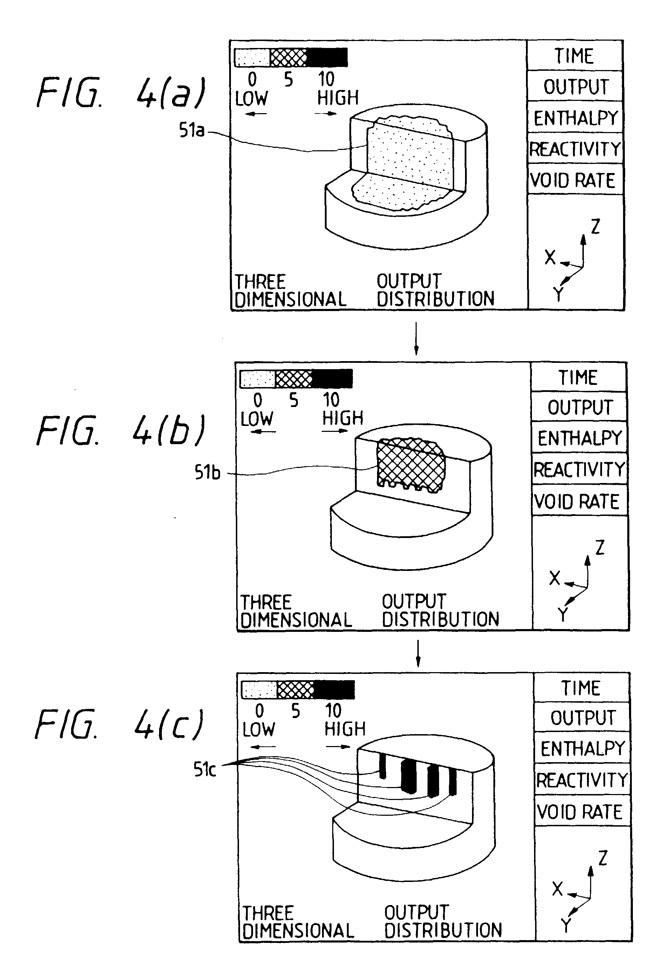

In the present embodiment, when the value of Y is caused to be successively increased, portions of the three-dimensional physical quantity $\phi$ having small values successively disappear from the display screen and finally only the display of the spatial position having Ymax remains. For example, assuming the output inside the reactor core of a nuclear reactor is taken as the physical quantity $\phi$, the displayed screen changes in the order from Fig. 4 (a) to Fig. 4 (c). Here, the distributions 51a, 51b and 51c on the respective screens show the distribution when $Y \geqq Ya$, $Y \geqq Yb$ and $Y \geqq Yc$ respectively, and $Ya < Yb < Yc$. When these displays are formed, for example, it is determined from the screen of Fig. 4 (c) that the high output portions distribute near the center of the reactor core extending long in the vertical axis direction. Further from the screen in Fig. 4 (a) it is determined that the outputs in the outside area of the reactor core are substantially the same in the longtitudinal direction and in the lateral direction. In comparison with the conventional display method in which the sliced planes in the longitudinal direction or in the lateral direction are provided and where the respective output distributions corresponding to Fig. 4 (a), (b) and (c) are grasped only on the respective sliced planes, in the present embodiment by displaying the output in the reactor core while successively erasing the display images of the portions having a low output in the reactor core and causing the three dimensional distributions 51a-51c to be displayed successively for appropriate time intervals, an intuitive grasp of the output distribution over the entire region in the reactor core is facilitated. Further, in a nuclear reactor fuel assembly in an object system for analysis when thermal allowance is selected as the physical quantity $\phi$ and the above display method is applied therefor, it can be immediately understood where thermally severe portions are produced in the complex assembly of fuel rods, water rods and spacers, and portions having a thermal allowance can be grasped over the entire region of the assembly, as well. The present embodiment is useful for planning suitable improvements such as the improvement of the flow distribution. The present embodiment may also be used with the same effect for the display of the spatial distribution of physical quantities such as temperature, pressure, void rate, neutron flux and heat flux.

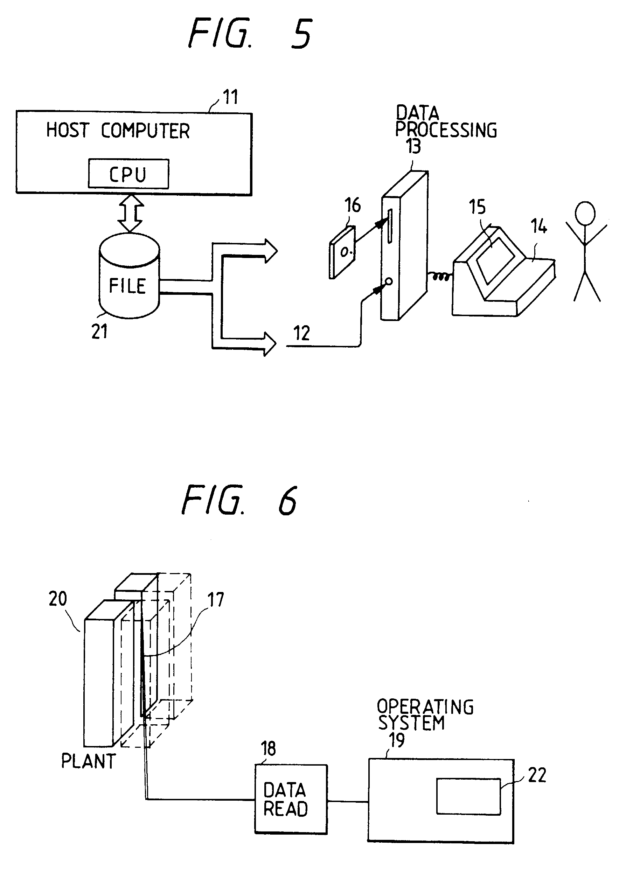

Fig. 5 shows an embodiment of the three-dimensional physical quantity display device using a display method according to the present invention. A calculation result obtained by a computer 11 which has a capacity capable of a large scaled physical calculation simulation for such as a nuclear power plant is stored in a data file 21. The computer 11 and the file 21 are connected with a work station or a minicomputer through a cable 12. The work station of the minicomputer is constituted of a keyboard 14, a display 15 and a data processing part 13, and has functions for executing the processing shown in Fig. 1 to Fig. 3. The physical quantity data of the processing objects are transferred through the cable 12 from the data file 21 to the data processing part 13, or after the data in the data file 21 are once copied in the data recording medium such as a magnetic tape and a floppy disk, they are set in the data processing part 13. A user inputs information such as an initial value Y0 of a physical quantity $\phi$ desired to be displayed and display time $\Delta t$ from the keyboard 14. Then the display processings shown in Fig. 1 to Fig. 3 are performed in the data processing part 13 and the screen images are displayed on the display 15. The processing sequences shown in Fig. 1 to Fig. 3 may be inputted into the processing part 13 as a program, or an IC in which such program is written beforehand may be provided.

Fig. 6 shows a consitution of a plant monitoring device where the display method according to the present invention is used for the display unit thereof. In a plant 20, for example a nuclear reactor, a measuring instrument 17 is provided, the process quantities observed by this instrument are processed through a data reading device 18, and displayed on the screen of a display 22 of a central control operating system 19. The central control operating system 19 has processing functions shown in Fig. 1 to Fig. 3 and displays distributions of such as measured output, temperature and pressure in a reactor core so as to be easily grasped by sense. Since in general the regions in the reactor core of a nuclear reactor where thermal conditions are severe are distributed in a complicated manner in the reactor core and the distribution pattern changes with time, if the present invention is applied for monitoring conditions of the reactor core in on-line, the three-dimensional condition in the reactor core can be momentarily grasped without re-setting the sliced planes many times.

According to the present invention, processing necessitating the designation of a sliced plane and thereafter the calculation of distribution thereof for every one display is eliminated, and an advantage is obtained in that a three dimensional distribution display facilitating quick grasp by sense is enabled.

## Claims

1. A method of displaying the three-dimensional spatial distribution of a physical quantity, comprising the following steps:

   - dividing the value range of the physical quantity into a plurality of small value ranges by specifying a threshold value (Ya, Yb, Yc) for each range,
   - successively selecting the threshold values so that they successively increase or decrease,
   - determining, for each selected threshold value, all positions in the three-dimensional space where the physical quantity has a value which is either larger or smaller than the selected threshold value, and
   - successively displaying the respective determined positions on a display for a predetermined time interval.

2. The method according to claim 1, wherein the number of the physical quantity values is finite, and each of the small value ranges comprises one of the physical quantity values.

3. The method according to claim 1 or 2, wherein the threshold values successively increase, and that the value of the physical quantity determined for display is larger or smaller than the threshold value.

4. The method according to claims 1 to 3, wherein a two-dimensional projection of a coordinate system, such as a cartesian coordinate system or a polar coordinate system, corresponding to the two-dimensional display of the spatial distribution of the physical quantity, is indicated on the display.

5. Display device for displaying the three-dimensional spatial distribution of a physical quantity, comprising

   - division means for dividing the value range of the physical quantity into a plurality of small value ranges by specifying a threshold value (Ya, Yb, Yc) for each range,
   - selecting means for successively selecting the threshold values so that they successively increase or decrease,
   - determining means for determining, for each selected threshold value, all positions in the three-dimensional space where the physical quantity has a value which is either larger or smaller than the selected threshold value, and
   - display means for successively displaying the respective determined positions on a display for a predetermined time interval.

6. Display device according to claim 5, wherein the number of the physical quantity values is finite, and each of the small value ranges comprises one of the physical quantity values.

7. Display device according to claim 5 or 6, wherein the threshold values successively increase and that the value of the physical quantity determined for display is larger or smaller than the threshold value.

8. Display device according to claims 5 to 7, wherein a two-dimensional projection of a coordinate system, such as a cartesian coordinate system or a polar coordinate system, corresponding to the two-dimensional display of the spatial distribution of the physical quantity, is indicated on the display.

## Patentansprüche

1. Verfahren zur Darstellung der dreidimensionalen räumlichen Verteilung einer physikalischen Größe, gekennzeichnet durch folgende Schritte:

   - Unterteilen des Wertbereichs der physikalischen Größe in mehrere kleine Wertbereiche durch Festlegen jeweils eines Schwellenwertes (Ya, Yb, Yc) für jeden Bereich,

   - Auswählen der Schwellenwerte nacheinander derart, daß sie nacheinander steigen oder sich verringern,

   - Ermitteln sämtlicher Positionen im dreidimensionalen Raum für jeden ausgewählten Schwellenwert, in denen die physikalische Größe einen Wert hat, der größer oder kleiner ist als der ausgewählte Schwellenwert, und

   - Darstellen der einzelnen ermittelten Positionen nacheinander auf einem Bildschirm in einem vorbestimmten Zeitintervall.

2. Verfahren nach Anspruch 1 dadurch gekennzeichnet, daß die Anzahl der Werte der physikalischen Größe begrenzt ist und daß jeder der kleinen Wertbereiche einen der Werte der physikalischen Größe beinhaltet.

3. Verfahren nach Anspruch 1 oder 2 dadurch gekennzeichnet, daß die Schwellenwerte nacheinander steigen und daß der zur Darstellung vorgesehene Wert der physikalischen Größe größer oder kleiner ist als der Schwellenwert.

4. Verfahren nach den Ansprüchen 1 bis 3 dadurch gekennzeichnet, daß eine zweidimensionale Projektion eines Koordinatensystems, z. B. eines kartesischen Koordinatensystems oder eines Polarkoordinatensystems, die der zweidimensionalen Darstellung der räumlichen Verteilung der physikalischen Größe entspricht, auf dem Bildschirm angezeigt wird.

5. Einrichtung zur Darstellung der dreidimensionalen räumlichen Verteilung einer physikalischen Größe, gekennzeichnet durch folgende Mittel:

- Teilungsmittel zur Unterteilung des Wertbereichs der physikalischen Größe in mehrere kleine Wertbereiche durch Festlegen jeweils eines Schwellenwerts (Ya, Yb, Yc) für jeden Bereich,

- Auswahlmittel zur Auswahl der Schwellenwerte nacheinander derart, daß sie nacheinander steigen oder sich verringern,

- Ermittlungsmittel, die für jeden ausgewählten Schwellenwert sämtliche Positionen im dreidimensionalen Raum ermitteln, in denen die physikalische Größe einen Wert hat, der größer oder kleiner ist als der ausgewählte Schwellenwert, und

- Darstellungsmittel zur Darstellung der einzelnen ermittelten Positionen nacheinander auf einem Bildschirm in einem vorbestimmten Zeitintervall.

6. Darstellungseinrichtung nach Anspruch 5 dadurch gekennzeichnet, daß die Anzahl der Werte der physikalischen Größe begrenzt ist und daß jeder der kleinen Wertbereiche einen Wert der physikalischen Größe beinhaltet.

7. Darstellungseinrichtung nach Anspruch 5 oder 6 dadurch gekennzeichnet, daß die Schwellenwerte nacheinander steigen und daß der zur Darstellung vorgesehene Wert der physikalischen Größe größer oder kleiner ist als der Schwellenwert.

8. Darstellungseinrichtung nach den Ansprüchen 5 bis 7 dadurch gekennzeichnet, daß eine zweidimensionale Projektion eines Koordinatensystems, z. B. eines kartesischen Koordinatensystems oder eines Polarkoordinatensystems, die der zweidimensionalen Darstellung der räumlichen Verteilung der physikalischen Größe entspricht, auf dem Bildschirm angezeigt wird.

**Revendications**

1. Procédé pour afficher la distribution spatiale tridimensionnelle d'une quantité physique, comportant les étapes consistant à :

- diviser la plage de valeurs de la quantité physique en une pluralité de petites plages de valeurs en spécifiant une valeur de seuil (Ya, Yb, Yc) pour chaque plage,

- sélectionner successivement les valeurs de seuil de manière à ce que celles-ci augmentent ou diminuent successivement,

- déterminer, pour chaque valeur de seuil sélectionnée, toutes les positions dans l'espace tridimensionnel au niveau desquelles la quantité physique possède une valeur qui est supérieure ou inférieure à la valeur de seuil sélectionnée, et

- afficher successivement les positions déterminées respectives sur un affichage pendant un intervalle de temps prédéterminé.

2. Procédé selon la revendication 1, dans lequel le nombre de valeurs de la quantité physique est fini, et chacune des petites plages de valeurs comprend l'une des valeurs de la quantité physique.

3. Procédé selon la revendication 1 ou 2, dans lequel les valeurs de seuil augmentent successivement, et la valeur de la quantité physique dont il a été déterminé qu'elle devait être affichée est supérieure ou inférieure à la valeur de seuil.

4. Procédé selon les revendications 1 à 3, dans lequel une projection bidimensionnelle d'un système de coordonnées, tel qu'un système de coordonnées cartésiennes ou un système de coordonnées polaires, correspondant à l'affichage bidimensionnel de la distribution spatiale de la quantité physique, est indiquée sur l'affichage.

5. Dispositif d'affichage pour afficher la distribution spatiale tridimensionnelle d'une quantité physique, comportant

- des moyens de division pour diviser la plage de valeurs de la quantité physique en une pluralité de petites plages de valeurs en spécifiant une valeur de seuil (Ya, Yb, Yc) pour chaque plage,

- des moyens de sélection pour sélectionner successivement les valeurs de seuil de manière à ce que celles-ci augmentent ou diminuent successivement,

- des moyens de détermination pour déterminer, pour chaque valeur de seuil sélectionnée, toutes les positions dans l'espace tridimensionnel au niveau desquelles la quantité physique possède une valeur qui est supérieure ou inférieure à la valeur de seuil sélectionnée, et

- des moyens d'affichage pour afficher successivement les positions déterminées respectives sur un affichage pendant un intervalle de temps prédéterminé.

6.   Dispositif d'affichage selon la revendication 5, dans lequel le nombre de valeurs de la quantité physique est fini, et chacune des petites plages de valeurs comprend l'une des valeurs de la quantité physique.

7.   Dispositif d'affichage selon la revendication 5 ou 6, dans lequel les valeurs de seuil augmentent successivement et la valeur de la quantité physique dont il a été déterminé qu'elle devait être affichée est supérieure ou inférieure à la valeur de seuil.

8.   Dispositif d'affichage selon les revendications 5 à 7, dans lequel une projection bidimensionnelle d'un système de coordonnées, tel qu'un système de coordonnées cartésiennes ou un système de coordonnées polaires, correspondant à l'affichage bidimensionnel de la distribution spatiale de la quantité physique, est indiquée sur l'affichage.

# FIG. 1

```
         ( START )
            │
            ▼
┌─────────────────────────┐  ┐100
│ STORAGE OF PHYSICAL     │
│ QUANTITY IN FILE        │
└─────────────────────────┘
            │
            ▼
┌─────────────────────────┐  ┐101
│ SELECTION OF PHYSICAL   │
│ QUANTITY TO BE DISPLAYED │
└─────────────────────────┘
            │
            ▼
┌─────────────────────────┐  ┐102
│ DESIGNATION OF INITIAL VALUE│
│ Y₀ OF VALUE OF PHYSICAL │
│ QUANTITY TO BE DISPLAYED │
└─────────────────────────┘
            │
            ▼
┌─────────────────────────┐  ┐103
│ DESIGNATION OF          │
│ INCREMENT ΔY            │
└─────────────────────────┘
            │
            ▼
┌─────────────────────────┐  ┐104
│ DESIGNATION OF DISPLAY TIME│
│ Δt OF ONE PICTURE       │
└─────────────────────────┘
            │
            ▼
┌─────────────────────────┐  ┐105
│ DATA READ-IN OF PHYSICAL│
│ QUANTITY TO BE DISPLAYED │
└─────────────────────────┘
            │
            ▼
┌─────────────────────────┐  ┐106
│ RETRIEVAL OF MAXIMUM VALUE│
│ Vmax AND MINIMUM VALUE Vmin│
│ OF READ-IN DATA         │
└─────────────────────────┘
            │
            ▼
     ┌──────────────┐  ┐107
     │   y ← y₀     │
     └──────────────┘
            │
            ▼
┌─────────────────────────┐  ┐108
│ CALCULATION OF SPATIAL  │
│ COORDINATE VALUE HAVING VALUE│
│ Y OF PHYSICAL QUANTITY  │
└─────────────────────────┘
            │
            ▼
┌─────────────────────────┐  ┐109
│ GRAPHIC DISPLAY OF      │
│ RESULT FOR Δt SECONDS   │
└─────────────────────────┘
            │
            ▼
     ┌──────────────┐  ┐110
     │  y ← y + Δy  │
     └──────────────┘
            │
            ▼
        ┌────────────┐  ┐111
   YES  │ y < ymax(Δy>0)│
 ───────│ y > ymax(Δy<0)│
        └────────────┘
            │ NO
            ▼
      ( TERMINATION )
```

# FIG. 2

106

READ-IN OF INTEGER N DIVIDING RANGE OF $Y_{min} \leqq Y \leqq Y_{max}$ — 113

DIVISION OF RANGE OF $Y_{min} \leqq Y \leqq Y_{max}$ INTO N PIECES OF GROUPS $(Y_1, Y_2, \text{---} \text{ AND } Y_N)$ — 114

JUDGMENT TO WHICH GROUPS OF $Y_1, Y_2, \text{---}$ AND $Y_N$ VALUE Y BELONGS ON ALL Ys BEING READ IN — 115

$y \leftarrow y_0$ — 107

DISPLAY OF ALL SPATIAL ELEMENTS HAVING VALUES IN $Y_i$ GROUP TO WHICH VALUE Y BELONGS FOR $\Delta t$ SECONDS — 116

ERASING OF SCREEN IMAGE — 119

$i \leftarrow i + 1$ — 117

YES

$i \leqq N$ — 118

NO

TERMINATION

# FIG. 3

FIG. 4(a)

FIG. 4(b)

FIG. 4(c)

# FIG. 5

# FIG. 6